Europäisches Patentamt

European Patent Office

Office européen des brevets

(11) Veröffentlichungsnummer: **0 303 002**
**B1**

(12) **EUROPÄISCHE PATENTSCHRIFT**

(45) Veröffentlichungstag der Patentschrift: **16.01.91**

(51) Int. Cl.⁵: **B 23 B 31/10**

(21) Anmeldenummer: **88107288.8**

(22) Anmeldetag: **06.05.88**

(54) Spannfutter.

(30) Priorität: **12.08.87 DE 3726773**

(43) Veröffentlichungstag der Anmeldung:
**15.02.89 Patentblatt 89/07**

(45) Bekanntmachung des Hinweises auf die
Patenterteilung:
**16.01.91 Patentblatt 91/03**

(84) Benannte Vertragsstaaten:
**DE ES FR GB IT SE**

(56) Entgegenhaltungen:
**DE-A-3 434 308**
**DE-A-3 437 505**
**US-A-4 362 306**

(73) Patentinhaber: **Röhm, Günter Horst**
**Heinrich-Röhm-Strasse 50**
**D-7927 Sontheim (DE)**

(72) Erfinder: **Röhm, Günter Horst**
**Heinrich-Röhm-Strasse 50**
**D-7927 Sontheim (DE)**

(74) Vertreter: **Fay, Hermann, Dipl.-Phys. Dr. et al**
**Dipl.-Phys. Hermann Fay und Dr. Joachim**
**Dziewior Ensingerstrasse 21 Postfach 17 67**
**D-7900 Ulm/Donau (DE)**

Courier Press, Leamington Spa, England.

## Beschreibung

Die Erfindung betrifft ein Spannfutter mit im Futterkörper radial zur Futterachse verstellbaren Spannbacken, von welchen jede aus zwei in Richtung der Futterachse hintereinander liegenden, jeweils für sich im Futterkörper geführten Backenteilen besteht, die zur Änderung des Spannbereichs gegeneinander verschiebbar und in zueinander verschiedenen Stellungen, die sich im Abstand voneinander jeweils um weniger als der maximal mögliche Spannhub unterscheiden, durch ein Kupplungsglied miteinander kuppelbar sind, ferner mit einem axial im Futterkörper entsprechend dem maximal möglichen Spannhub verstellbaren Antriebsglied, das in Getriebeverbindung mit dem axial hinteren Backenteil jeder Spannbacke steht, und mit einer Stelleinrichtung zum Verstellen der Kupplungsglieder zwischen jeweils zwei Endstellungen, die dem ein- bzw. ausgekuppelten Zustand der Backenteile entsprechen.

Spannfutter dieser Art sind aus der US-PS 3 682 491 bekannt und ermöglichen auf einfache Weise eine Änderung des Spannbereichs, da hierzu nur die vorderen Backenteile bei vorübergehend ausgekuppelten Backenteilen gegenüber den hinteren Backenteilen zu verschieben sind. Jedoch ist dies bei den bekannten Spannfuttern nur von Hand und nur einzeln von Spannbacke zu Spannbacke möglich.

Der Erfindung liegt die Aufgabe zugrunde, ein Spannfutter der eingangs genannten Art so auszubilden, daß eine automatische Spannbereichsverstellung möglich ist.

Diese Aufgabe wird nach der Erfindung dadurch gelöst, daß eine Feststelleinrichtung zum Fixieren der vorderen Backenteile im Futterkörper vorgesehen ist, und daß die Feststelleinrichtung, ferner das Antriebsglied für die Spannbacken und die Stelleinrichtung für die Kupplungsglieder in Abhängigkeit voneinander derart steuerbar sind, daß das Antriebsglied eine hin-und hergehende Bewegung mit einem Hub ausführt, der dem Abstand zwischen den die Kupplung beider Backenteile ermöglichenden Stellungen des hinteren Backenteils entspricht, daß dabei die Kupplungsglieder in einer von beiden Hubrichtungen ein- und in der anderen Hubrichtung ausgekuppelt sind, und daß während des Bewegungshubes mit ausgekuppelten Kupplungsgliedern die vorderen Backenteile im Futterkörper fixiert sind.

Im Ergebnis können bei dem erfindungsgemäßen Spannfutter die vorderen Backenteile mit Hilfe der hinteren Backenteile selbst relativ zu letzteren verstellt werden, so daß das Antriebsglied nicht nur zum Spannen und Lösen des Futters, sondern auch zur automatischen Änderung des Spannbereichs dient. Die vorderen Backenteile werden dabei im Futterkörper von den hinteren Backenteilen jeweils um Schritte verschoben, die dem Abstand der Stellungen entsprechen, in welchen beide Backenteile miteinander kuppelbar sind. Ausgehend von einer beliebigen Stellung des vorderen Backenteils wird bei entkuppelten Backenteilen der hintere Backenteil verschoben und in der verschobenen Stellung wieder mit dem vorderen Backenteil gekuppelt. Der hintere Backenteil kann unter Mitnahme des vorderen Backenteils wieder in die Ausgangsstellung zurück gestellt werden. Durch entsprechende Wiederholungen dieses Vorgangs können die Backenteile über den gesamten möglichen Spannbereich gegeneinander verstellt werden. Eines vom Spannantrieb unabhängigen eigenen Verstellantriebs für die vorderen Backenteile bedarf es nicht.

In bevorzugter, an sich bekannter Ausführungsform sind die Kupplungsglieder in den hinteren Backenteilen axial verstellbar geführte Kupplungsbolzen, die im eingekuppelten Zustand mit einer Stirnverzahnung an einer sich radial an den vorderen Backenteilen erstreckenden Gegenverzahnung zum Eingriff kommen. Der Abstand zwischen den Stellungen, in welchen beide Backenteile miteinander kuppelbar sind, ist dann an jeder Stelle des Spannbereichs gleich groß, nämlich gleich dem Zahnabstand der Stirnverzahnung des Kupplungsbolzens bzw. der Gegenverzahnung am vorderen Backenteil, oder einem ganzzahligen Vielfachen dieses Zahnabstands. Der einstellbare Arbeitsbereich ist um so größer, je länger die Gegenverzahnung sich radial über den vorderen Backenteil erstreckt.

Hinsichtlich der Stelleinrichtung für die Kupplungsglieder sind verschiedene Ausführungsformen möglich. Eine sehr vorteilhafte Ausführungsform ist dadurch gekennzeichnet, daß die Stelleinrichtung für die Kupplungsglieder einen im Futterkörper koaxialen verdrehbar geführten Stellring umfaßt, der gelenkig mit einer tangential im Futterkörper geführten und durch eine beidseits beaufschlagbare Zylinder-Kolben-Anordnung verstellbare Stellstange im Eingriff steht und für jedes Kupplungsglied eine Steuerschräge aufweist, über die beim Verdrehen des Stellrings die Kupplungsglieder gegen die Kraft einer Rückstellfeder in die eingekuppelte Stellung verschiebbar sind. Diese Ausführungsform hat den Vorteil, daß eine einzige Zylinder-Kolben-Anordnung zur Betätigung aller Kupplungsglieder ausreicht und in der eingekuppelten Stellung die Kupplungsglieder durch den Stellring verriegelt sind.

Eine andere sehr zweckmäßige Ausführungsform ist dadurch gekennzeichnet, daß die Stelleinrichtung für jedes Kupplungsglied eine eigene, quer zur Futterachse im Futter geführte und durch eine beidseits beaufschlagbare Zylinder-Kolben-Anordnung verschiebbare Stellstange aufweist, an der in einem Keilgetriebe das Kupplungsglied radial um den Spannhub der Spannbacken gegenüber der Stellstange verschiebbar eingehängt ist, wobei die Zylinder-Kolben-Anordnungen aller Stellstangen gemeinsam steuerbar sind. Die an den Stellstangen eingehängten Enden der Kupplungsglieder greifen im Bereich der Stellstange in Ausnehmungen des Futterkörpers, die Radialverschiebungen der Kupplungsglieder in der Größe des Spannhubs der Spannbacken ermöglichen.

Der zur Verstellung des Arbeitsbereiches erforderliche Hub des Antriebsgliedes ist kleiner als der maximal mögliche Spannhub und muß möglichst genau dem Abstand derjenigen Stellungen entsprechen, in welchen die beiden Backenteile jeder Spannbacke miteinander kuppelbar sind. Dies kann entweder über eine entsprechend genaue Hubsteuerung des Antriebsgliedes erreicht werden oder einfacher mit einem bei der Verstellung des Arbeitsbereiches den Hub des Antriebsglieds begrenzenden Anschlag. Eine bevorzugte Ausführungsform der Erfindung ist daher dadurch gekennzeichnet, daß am Futterkörper ein in die Bahn des Antriebsgliedes hinein verstellbarer Anschlag vorgesehen ist, der den Hub des Antriebsgliedes auf diejenige Größe beschränkt, die den Abstand zwischen den die Kupplung beider Backenteile ermöglichenden Stellungen des hinteren Backenteils entspricht. Ist das Antriebsglied in bekannter Weise als Antriebskolben ausgebildet, der über je ein Keilhakengetriebe mit den hinteren Backenteilen in Verbindung steht, so ist der Anschlag vorzugsweise als axial gegen das Antriebsglied vorstehender, quer zur Futterachse verschiebbar im Futterkörper geführter Zapfen ausgebildet, der in seiner den maximal möglichen Spannhub freigebenden Stellung in eine der die Keilhakengetriebe am Antriebsglied bildenden Nuten greift, in seiner anderen Stellung dagegen am Antriebskolben zur Anlage kommt. Zur Verstellung dieses Anschlags kann eine gegen die Kraft einer Rückstellfeder arbeitende steuerbare Zylinder-Kolben-Anordnung vorgesehen sein.

Für die Feststelleinrichtung bieten sich ebenfalls mehrere Ausführungsformen an, je nach Ausbildung der Stelleinrichtung für die Kupplungsglieder. Verfügt diese Stelleinrichtung in der schon beschriebenen Weise über einen Stellring so umfaßt zweckmäßig die Feststelleinrichtung für jede Spannbacke eine im Futterkörper quer zur Futterachse geführte Verriegelungsstange, die mit einem Verriegelungsstift von der Seite her in die Gegenverzahnung des vorderen Backenteils greift und durch eine axial im Futterkörper geführte Treibstange verschiebbar ist, die ihrerseits durch den Stellring verstellbar ist. Die Verriegelungsstange und die Treibstange sind vorzugsweise durch ein Keilhakengetriebe verbunden, und die Treibstange steht mit dem Stellring über ein Keilgetriebe in Verbindung, nämlich über einen Keilzahn am Stellring, der in eine Keilnut an der Treibstange greift. Der Vorteil dieser Anordnung besteht darin, daß die Verriegelungsstange und die Verriegelungsstifte zwangsweise mit dem Stellring gekuppelt sind, also die Stellung der Verriegelungsstifte eindeutig von der Drehstellung des Stellrings abhängt. Ist kein solcher Stellring vorhanden, also für jedes Kupplungsglied eine eigene Stellstange vorgesehen, so ist die in diesem Fall bevorzugte Ausführungsform dadurch gekennzeichnet, daß die Feststelleinrichtung für jede Spannbacke eine im Futterkörper quer zur Futterachse geführte Verriegelungsstange umfaßt, die gegen die Kraft einer Rückstellfeder mit einem Verriegelungsstift von der Seite her in die Gegenverzahnung des vorderen Backenteils greift, daß die Verriegelungsstange gegen die Kraft der Rückstellfeder über eine Schrägfläche an einem Treibbolzen abgestützt ist, der axial im Futterkörper verschiebbar geführt und seinerseits radial um den Spannhub der Spannbacke verschiebbar gegen einen zu ihm parallel im hinteren Backenteil verschiebbar geführten Stellbolzen abgestützt und daß der Stellbolzen über ein weiteres Getriebeglied mit dem Kupplungsglied gekuppelt ist. Hier wird somit die Verstellung der Verriegelungsstange und des Verriegelungsstiftes von der Verstellung des Kupplungsgliedes unmittelbar abhängig gemacht. Im einzelnen kann dabei das Getriebeglied ein parallel zur Verriegelungsstange im hinteren Backenteil verschiebbar geführter Steuerbolzen sein, der über Schrägflächen einerseits dem axial verschiebbaren Kupplungsglied und andererseits dem Stellbolzen anliegt, wobei alle Schrägflächen so gewählt sind, daß die axiale Verstellung des Kupplungslieds zu gegenläufiger Verstellung des Stellbolzens und des Treibbolzens führt und die axiale Vorverstellung des Treibbolzens den Verriegelungsstift in die Gegenverzahnung drückt.

Im folgenden wird die Erfindung an zwei in der Zeichnung dargestellten Ausführungsbeispielen näher erläutert; es zeigen:

Fig. 1 eine Stirnansicht eines Spannfutters nach der Erfindung, teils im Schnitt,

Fig. 2 den Schnitt in Richtung II—II durch das Spannfutter nach Fig. 1,

Fig. 3 den Schnitt III—III in Fig. 1 und

Fig. 4 den Schnitt IV—IV in Fig. 2,

Fig. 5 eine andere Ausführungsform des erfindungsgemäßen Spannfutters in einer Stirnansicht, teils im Schnitt,

Fig. 6 den Schnitt VI—VI in Fig. 5,

Fig. 7 den Schnitt VII—VII in Fig. 6 und

Fig. 8 den Schnitt VIII—VIII in Fig. 6.

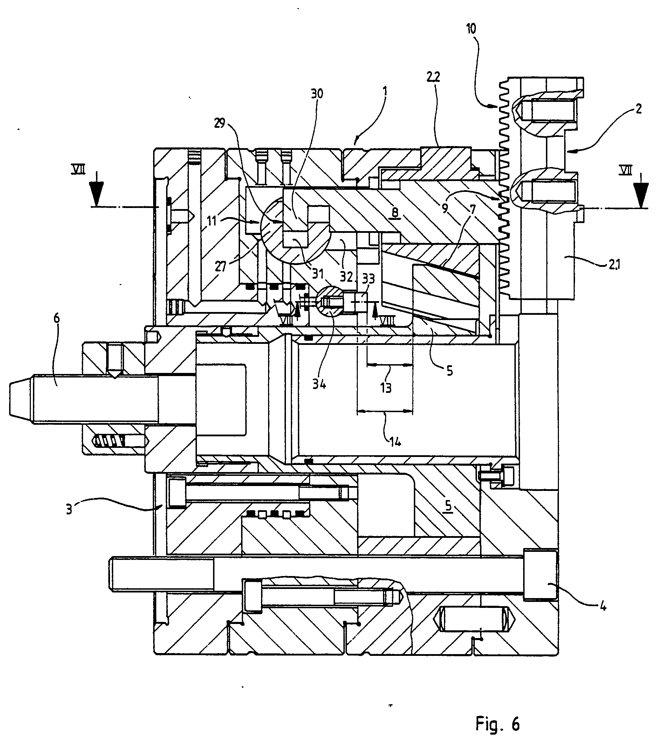

Im Futterkörper 1 sind drei Spannbacken 2 radial zur Futterachse verstellbar. Der Futterkörper 1 ist auf seiner Rückseite zum Anschluß an eine nicht dargestellte Drehspindel eingerichtet, nämlich in üblicher Weise mit einer Ausdrehung 3 und mit axialen Befestigungsschrauben 4 versehen. Zum Antrieb der Spannbacken 2 dient ein als Spannkolben ausgebildetes Antriebsglied 5, das über eine Schraube oder Schraubhülse 6 mit einer in der Zeichnung ebenfalls nicht dargestellten, durch die hohle Drehspindel verlaufenden Spannstange verbunden werden kann. Das Antriebsglied 5 steht mit den Spannbacken 2 über ein Keilhakengetriebe 7 in Verbindung. In der Zeichnung ist jeweils die axial vorderste Stelle des Antriebsgliedes 5 dargestellt, die bei den Spannbacken 2 der radial äußeren Stellung ihres Spannhubes entspricht. Wird das Antriebsglied 5 in der Zeichnung nach links bewegt, bewegen sich die Spannbacken 2 radial einwärts. Jede Spannbacke 2 besteht aus zwei in Richtung der Futterachse hintereinander liegenden, jeweils für sich im Futterkörper 1 geführten Backenteilen 2.1, 2.2. Nur der hintere Backenteil 2.2 ist jeweils mit dem Antriebsglied 5 verbunden. Die beiden Backenteile 2.1, 2.2 jeder Spannbacke 2 sind zur Änderung des Spannbereichs oder zum Austausch des vorderen Backenteils 2.1 gegeneinander verschiebbar und durch ein Kupplungsglied 8 miteinander kuppelbar, wobei in der Zeichnung jeweils der eingekuppelte Zustand dargestellt ist. Die Kupplung beider Backenteile 2.1, 2.2 miteinander ist nur möglich, wenn die beiden Backenteile sich zueinander in ausgewählten Stellungen befinden, die sich im Abstand voneinander jeweils um weniger als der maximal mögliche Spannhub unterscheiden. Dieser Abstand ist in den Ausführungsbeispielen gleich dem Zahnabstand einer an den Kupplungsglieder 8 vorgesehenen Stirnverzahnung 9 bzw. der an den vorderen Backenteilen 2.1 vorhandenen Gegenverzahnung 10, in der bei eingekuppelten Kupplungsgliedern 8 die Stirnverzahnung 9 zum Eingriff kommt. Die Kupplungsglieder 8 sind dabei in den hinteren Backenteilen 2.2 axial verstellbar geführte Kupplungsbolzen. Die Kupplungsglieder 8 werden zum Ein- bzw. Auskuppeln durch eine im folgenden noch näher zu beschreibende Stelleinrichtung 11 betätigt. Außerdem ist eine Feststelleinrichtung 12 vorgesehen, die ein Fixieren der vorderen Backenteile 2.1 im Futterkörper 1 ermöglicht. Diese Feststelleinrichtung 12, ferner das Antriebsglied 5 für die Spannbacken 2 und die Stelleinrichtung 11 für die Kupplungsglieder 8 sind in Abhängigkeit voneinander derart steuerbar, daß das Antriebsglied 5 eine hin- und hergehende Bewegung mit einem Hub ausführt, der dem Abstand zwischen den die Kupplung beider Backenteile 2.1, 2.2 ermöglichenden Stellungen des hinteren Backenteils 2.2 oder einem ganzzahligen Vielfachen dieses Abstandes entspricht. Dabei sind die Kupplungsglieder 8 in einer von beiden Hubrichtungen ein- und in der anderen Hubrichtung ausgekuppelt. Außerdem sind während des Bewegungshub mit ausgekuppelten Kupplungsgliedern 8 die vorderen Backenteile 2.1 im Futterkörper 1 fixiert. Werden im Ergebnis in der Zeichnung die beiden Backenteile 2.1, 2.2 jeder Spannbacke 2 entkuppelt und der vordere Backenteil 2.1 fixiert, wird dann anschließend der hintere Backenteil 2.2 durch Betätigen des Antriebsglieds 5 um einen Zahnabstand radial einwärts gefahren und dann wieder mit dem vorderen Backenteil 2.1 gekuppelt, so hat sich die relative Stellung beider Backenteile 2.1, 2.2 zueinander und damit der Spanndurchmesser um einen Zahnabstand geändert. Beim Zurückschieben des Antriebsglieds 5 und der hinteren Backenteile 2.2 in die Ausgangsstellung werden die vorderen Backenteile entsprechend mitgenommen. Änderungen des Spanndurchmessers um mehrere Zahnabstände ergeben sich dann durch entsprechende Wiederholungen des eben beschriebenen Vorgangs, der im Ergebnis zu einer Vergrößerung des Spanndurchmessers führt. Soll dagegen der Spannbereich im Sinne einer Verkleinerung des Spanndurchmesser geändert werden, so wird, ausgehend wiederum von dem in der Zeichnung dargestellten Zustand, das Antriebsglied 5 zunächst mit eingekuppelten Backenteilen 2.1, 2.2 nach links bewegt, wobei sich beide Backenteile zusammen radial um einen Zahnabstand einwärts bewegen. Anschließend werden die Backenteile entkuppelt, der vordere Backenteil 2.1 fixiert und das Antriebsglied 5 mit dem hinteren Backenteil 2.2 in die Ausgangsstellung zurückbewegt, wobei sich der hintere Backenteil 2.2 um einen Zahnabstand radial auswärts verschiebt. Werden anschließend beide Backenteile 2.1, 2.2 wieder miteinander gekuppelt, hat sich insgesamt eine Verringerung des Spanndurchmessers um einen Zahnabstand ergeben. Auch hier sind größere Änderungen des Spanndurchmessers durch wiederholte Ausführung des beschriebenen Vorgangs möglich. Der für diese Verstellungen erforderliche Backenhub ist in Fig. 6 durch den Doppelpfeil 13 bezeichnet. Der diesem Verstellhub gegenüber größere Spannhub des Antriebsgliedes 5 ist durch den Doppelpfeil 14 bezeichnet.

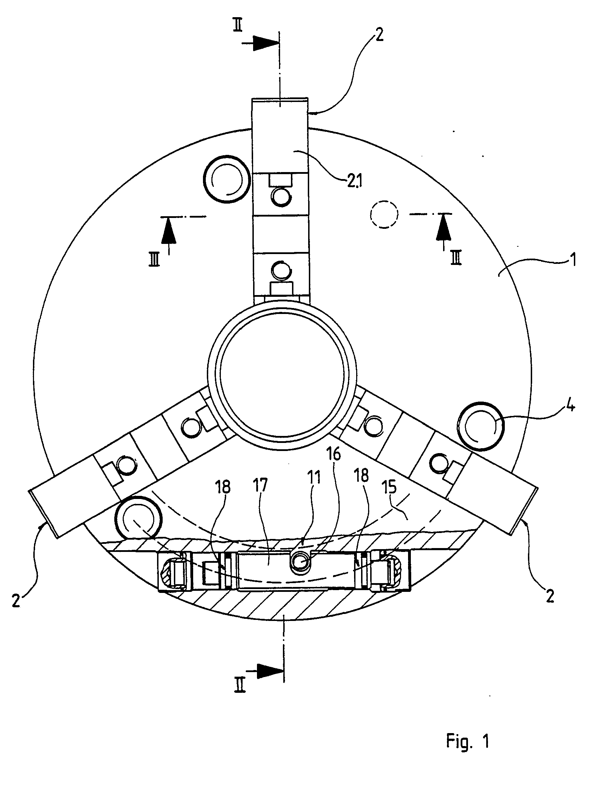

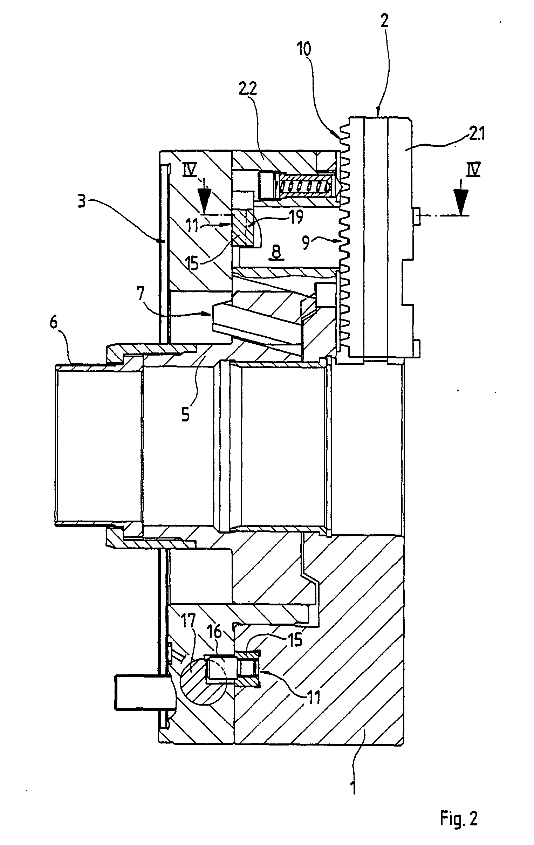

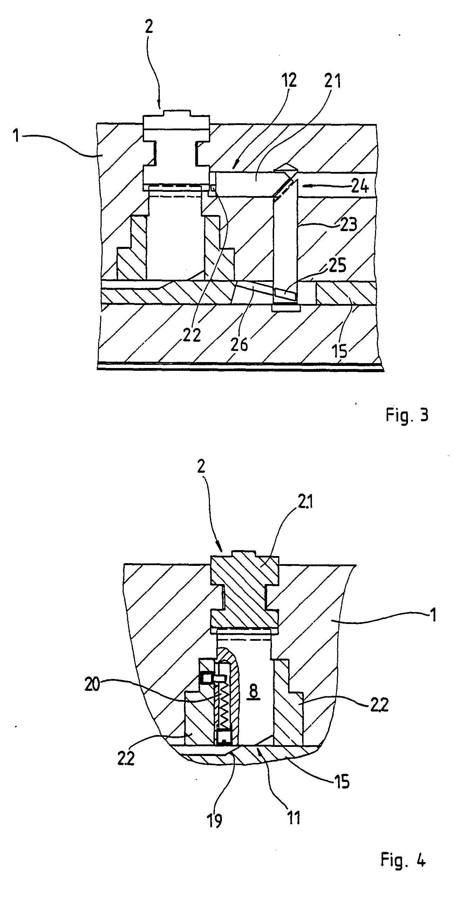

Im Ausführungsbeispiel nach den Fig. 1 bis 4 umfaßt die Stelleinrichtung 11 für die Kupplungsglieder 8 einen im Futterkörper 1 koaxialen, verdrehbar geführten Stellring 15, der über eine Mitnehmerrolle 16 gelenkig mit einer tangential im Futterkörper 1 geführten Stellstange 17 im Eingriff steht, die durch eine beidseits beaufschlagbare Zylinder-Kolben-Anordnung 18 verstellbar ist. Der Stellring 15 besitzt für jedes Kupplungsglied 8 eine Steuerschräge 19, über die beim Verdrehen des Stellrings 15 die Kupplungsglieder 8 gegen die Kraft einer Rückstellfeder 20 in die eingekuppelte Stellung verschiebbar sind. In dieser eingekuppelten Stellung sind die Kupplungsglieder 8 durch den Stellring 15 auch verriegelt. — Die Feststelleinrichtung 12 umfaßt für jede Spannbacke 2 eine im Futterkörper 1 quer zur Futterachse geführte Verriegelungsstange 21, die mit einem Verriegelungsstift 22 von der Seite her in die Gegenverzahnung 10 des vorderen Backenteils 2.1 greift. Sie kann durch eine axial im Futterkörper 1 geführte Treibstange 23 verschoben werden, die ihrerseits durch den Stellring 15 verstellt wird. Dazu sind die Verriegelungsstange 21 und die Treibstange 23 durch ein Keilhakengetriebe 24 verbunden. Die Treibstange 23 steht mit dem Stellring 15 über einen Keilzahn 25 in Verbindung, der sich am Stellring 15 befindet und in eine Keilnut 26 der Treibstange 23 greift. Dabei ist unter den Begriffen Keilzahn und Keilnut im wesentlichen zu verstehen, daß beide gegenüber der Achse des Stellrings 15 und der Treibstange 23 geneigt sind und gemeinsam ein Keilgetriebe bilden.

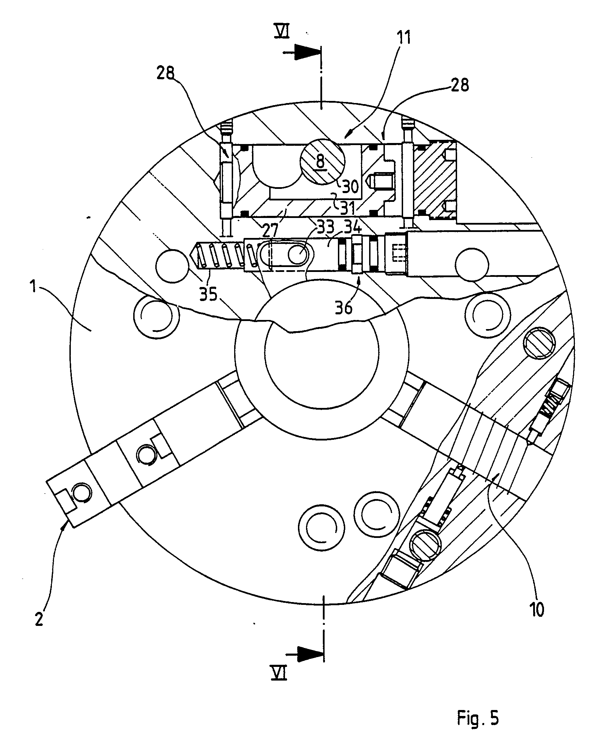

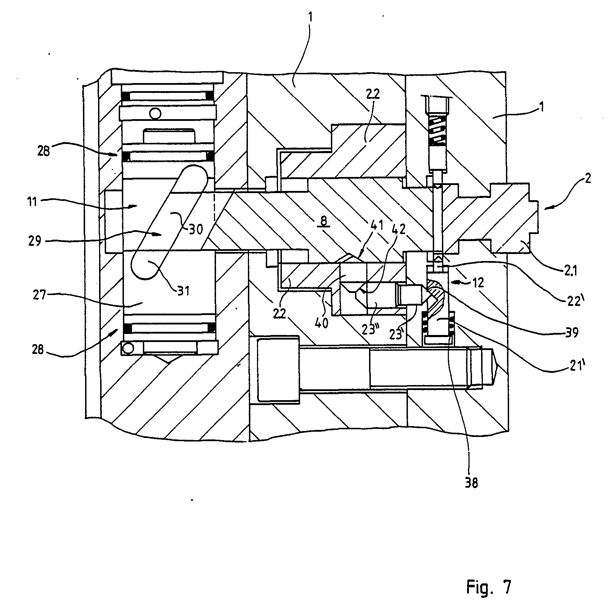

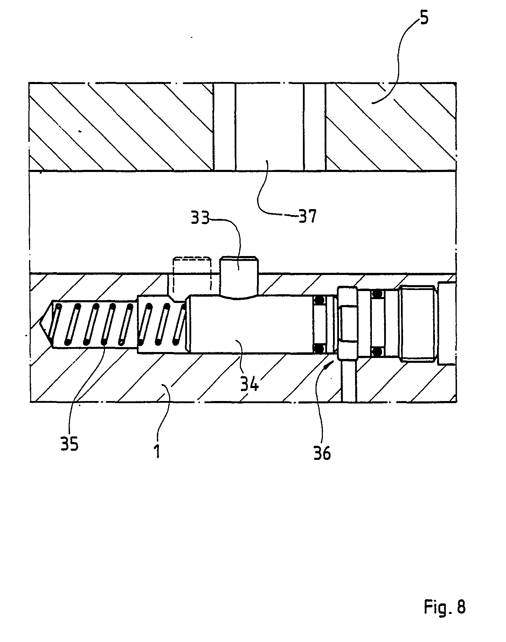

Im Ausführungsbeispiel nach den Fig. 5 bis 8 umfaßt die Stelleinrichtung 11 für jedes Kupplungsglied 8 eine eigene, quer zur Futterachse im Futterkörper 1 geführte Stellstange 27, die durch eine beidseits beaufschlagbare Zylinder-Kolben-Anordnung 28 verschiebbar ist. An der Stellstange 27 ist in einem Keilgetriebe 29 mit Keilnut 31 das Kupplungsglied 8 mit einem Keilhaken 30 radial um den Spannhub der Spannbacken 2 gegenüber der Stellstange 27 verschiebbar eingehängt. Diese Verschiebbarkeit ermöglicht den Kupplungsgliedern 8, trotz radial im Futterkörper 1 fester Anordnung der Stellstangen 27 den radialen Spann- oder Verstellhub zusammen mit den sie führenden hinteren Backenteilen 2.2 auszuüben. Entsprechend sind die Keilnuten 31 radial vertieft und die Ausnehmungen 32 radial verlängert, die im Futterkörper 1 die an den Stellstangen 27 eingehängten Enden der Kupplungsglieder 8 aufnehmen. — Um den für die Spannbereichs benötigten Verstellhub des Antriebsgliedes 5 genau zu erhalten, ist am Futterkörper 1 ein Anschlag 33 vorgesehen, der in die Bahn des Antriebsgliedes 5 verstellbar ist. Ist der Anschlag wirksam, ist der Hub des Antriebsgliedes 5 auf die einem Zahnabstand am vorderen Backenteil 2.1 bzw. am Kupplungsglied 8 entsprechende Größe begrenzt. Ist der Anschlag 33 dagegen unwirksam, kann das Antriebsglied 5 den maximal möglichen Spannhub voll ausfahren. Um den Anschlag 33 in diesem Sinne steuern zu können, ist er als axial gegen das Antriebsglied 5 vorstehender Zapfen ausgebildet, der an einer quer zur Futterachse im Futterkörper 1 verschiebbar geführten Stellstange 34 sitzt, die gegen die Kraft einer Rückstellfeder 35 von einer steuerbaren Zylinder-Kolben-Anordnung 36 betätigt werden kann. In seiner den maximal möglichen Spannhub frei gebenden Stellung greift der Anschlag 33 in eine der die Keilhakengetriebe 7 am Antriebsglied 5 bildenden Nuten 37, so daß er als Anschlag unwirksam ist. Wird dagegen der Anschlag 33 in die in Fig. 8 gestrichelt gezeichnete Stellung verschoben, kommt er an der rückwärtigen Kolbenstirnfläche des Antriebsgliedes 5 zur Anlage und begrenzt dessen Hub. — Die Feststelleinrichtung 12 umfaßt für jede Spannbacke 2 eine im Futterkörper 1 quer zur Futterachse geführte Verriegelungsstange 21, die gegen die Kraft einer Rückstellfeder 38 mit einem Verriegelungsstift 22' von der Seite in die Gegenverzahnung 10 des vorderen Backenteils 2.1 greift. Die Verriegelungsstange 21' ist gegen die Kraft der Rückstellfeder 38 über eine Schrägfläche 39 an einem Treibbolzen 23' abgestützt. Dieser ist axial im Futterkörper 1 verschiebbar geführt und seinerseits radial um den Spannhub der Spannbacke 2 verschiebbar gegen einen zu ihm axial im hinteren Backenteil 2.2 verschiebbar geführten Stellbolzen 23'' abgestützt, und dieser Stellbolzen 23'' ist über ein weiteres Getriebeglied 40 mit dem Kupplungsglied 8 gekuppelt. Die Verschiebbarkeit zwischen Treibbolzen 23' und Stelbolzen 23'' ermöglicht auch hier die beim Spann- oder Verstellhub der Spannbacken 2 auftretende radiale Verschiebung des an diesem Hub teilnehmenden Stellbolzens 23'' gegenüber dem im Futterkörper geführten Treibbolzen 23'. Das Getriebeglied 40 ist ein parallel zur Verriegelungsstange 21' im hinteren Backenteil 2.2 verschiebbar geführter Steuerbolzen, der über Schrägflächen 41, 42 einerseits dem axial verschiebbaren Kupplungsglied 8 und andererseits dem Stellbolzen 23'' anliegt. Alle Schrägflächen 39, 41, 42 sind dabei so gewählt, daß die axiale Verstellung des Kupplungsgliedes 8 zu gegenläufiger Verstellung des Stellbolzens 23'' und des Treibbolzens 23' führt und die axiale Vorverstellung des Treibbolzens 23' den Verriegelungsstift 22' in die Gegenverzahnung 10 drückt.

## Patentansprüche

1. Spannfutter mit im Futterkörper (1) radial zur Futterachse verstellbaren Spannbacken (2), von welchen jede aus zwei in Richtung der Futterachse hintereinander liegenden, jeweils für sich im Futterkörper geführten Backenteilen (2.1, 2.2) besteht, die zur Änderung des Spannbereichs gegeneinander verschiebbar und in zueinander verschiedenen Stellungen, die sich im Abstand voneinander jeweils um weniger als den maximal möglichen Spannhub unterscheiden, durch ein Kupplungsglied (8) miteinander kuppelbar sind, ferner mit einem axial im Futterkörper (1) entsprechend dem maximal möglichen Spannhub verstellbaren Antriebsglied (5), das in Getriebeverbindung mit dem axial hinteren Backenteil (2.2) jeder Spannbacke (2) steht, und mit einer Stelleinrichtung (11) zum Verstellen der Kupplungsglieder (8) zwischen jeweils zwei Endstellungen, die dem ein- bzw. ausgekuppelten Zustand der Backenteile (2.1, 2.2) entsprechen, dadurch gekennzeichnet, daß eine Feststelleinrichtung (12) zum Fixieren der vorderen Backenteile (2.1) im Futterkörper (1) vorgesehen ist, und daß die Feststelleinrichtung (12), ferner das Antriebsglied (5) für die Spannbacken (2) und die Stelleinrichtung (11) für die Kupplungsglieder (8) in Abhängigkeit voneinander derart steuerbar sind, daß das Antriebsglied (5) eine hin- und hergehende Bewegung mit einem Hub ausführt, der dem Abstand zwischen den die Kupplung beider Backenteile (2.1, 2.2) ermöglichenden Stellungen des hinteren Backenteils (2.2) entspricht, daß dabei die Kupplungsglieder (8) in einer von beiden Hubrichtungen ein-und in der anderen Hubrichtung ausgekuppelt sind, und daß während des Bewegungshubes mit ausgekuppelten Kupplungsgliedern (8) die vorderen Backenteile (2.1) im Futterkörper (1) fixiert sind.

2. Spannfutter nach Anspruch 1, dadurch gekennzeichnet, daß die Kupplungsglieder (8) in den hinteren Backenteilen (2.2) axial verstellbar geführte Kupplungsbolzen sind, die im eingekuppelten Zustand mit einer Stirnverzahnung (9) an einer sich radial an den vorderen Backenteilen (2.1) erstreckenden Gegenverzahnung (10) zum Eingriff kommen.

3. Spannfutter nach Anspruch 2, dadurch gekennzeichnet, daß die Stelleinrichtung (11) für die Kupplungsglieder (8) einen im Futterkörper (1) koaxialen verdrehbar geführten Stellring (15) umfaßt, der gelenkig mit einer tangential im Futterkörper (1) geführten und durch eine beidseits beaufschlagbare Zylinder-Kolben-Anordnung (18) verstellbaren Stellstange (17) im Eingriff steht und für jedes Kupplungsglied (8) eine Steuerschräge (19) aufweist, über die beim Verdrehen des Stellrings (15) die Kupplungsglieder (8) gegen die Kraft einer Rückstellfeder (20) in die eingekuppelte Stellung verschiebbar sind.

4. Spannfutter nach Anspruch 2, dadurch gekennzeichnet, daß die Stelleinrichtung (11) für jedes Kupplungsglied (8) eine eigene, quer zur Futterachse im Futterkörper (1) geführte und durch eine beidseits beaufschlagbare Zylinder-Kolben-Anordnung (28) verschiebbare Stellstange (27) aufweist, an der in einem Keilgetriebe (29) das Kupplungsglied (8) radial um den Spannhub der Spannbacken (2) gegenüber der Stellstange (27) verschiebbar eingehängt ist, wobei die Zylinder-Kolben-Anordnungen (28) aller Stellstangen (27) gemeinsam steuerbar sind.

5. Spannfutter nach einem der Ansprüche 1 bis 4, dadurch gekennzeichnet, daß am Futterkörper (1) ein in die Bahn des Antriebsgliedes (5) verstellbarer Anschlag (33) vorgesehen ist, der den Hub des Antriebsgliedes (5) auf diejenige Größe beschränkt, die dem Abstand zwischen den die Kupplung beider Backenteile (2.1, 2.2) ermöglichenden Stellungen des hinteren Backenteils (2.2) entspricht.

6. Spannfutter nach Anspruch 5, dadurch gekennzeichnet, daß bei Ausbildung des Antriebsgliedes (5) als Antriebskolben, der über je ein Keilhakengetriebe (7) mit den hinteren Backenteilen (2.2) in Verbindung steht, der Anschlag (33) als axial gegen das Antriebsglied (5) vorstehender, quer zur Futterachse verschiebbar im Futterkörper (1) geführter Zapfen ausgebildet ist, der in seiner den maximal möglichen Spannhub freigebenden Stellung in eine der die Keilhakengetriebe (7) am Antriebsglied (5) bildenden Nuten (37) greift.

7. Spannfutter nach Anspruch 5 oder 6, dadurch gekennzeichnet, daß zur Verstellung des Anschlags (33) eine gegen die Kraft einer Rückstellfeder (35) arbeitende steuerbare Zylinder-Kolben-Anordnung (36) vorgesehen ist.

8. Spannfutter nach Anspruch 3, dadurch gekennzeichnet, daß die Feststelleinrichtung (12) für jede Spannbacke (2) eine im Futterkörper (1) quer zur Futterachse geführte Verriegelungsstange (21) umfaßt, die mit einem Verriegelungsstift (22) von der Seite her in die Gegenverzahnung (10) des vorderen Backenteils (2.1) greift und durch eine axial im Futterkörper (1) geführte Treibstange (23) verschiebbar ist, die ihrerseits durch den Stellring (15) verstellbar ist.

9. Spannfutter nach Anspruch 8, dadurch gekennzeichnet, daß die Verriegelungsstange (21) und die Treibstange (23) durch ein Keilhakengetriebe (24) verbunden sind, und daß die Treibstange (23) mit dem Stellring (15) über ein Keilgetriebe in Verbindung steht, bestehend aus einem Keilzahn (26) am Stellring (15), der in eine Keilnut (25) an der Treibstange (23) greift.

10. Spannfutter nach Anspruch 4, dadurch gekennzeichnet, daß die Feststelleinrichtung (12) für jede Spannbacke (2) eine im Futterkörper (1) quer zur Futterachse geführte Verriegelungsstange (21') umfaßt, die gegen die Kraft einer Rückstellfeder (38) mit einem Verriegelungsstift (22') von der Seite her in die Gegenverzahnung (10) des vorderen Backenteils (2.1) greift, daß die Verriegelungsstange (21') gegen die Kraft der Rückstellfeder (38) über eine Schrägfläche (39) an einem Treibbolzen (23') abgestützt ist, der axial im Futterkörper (1) verschiebbar geführt und seinerseits radial um den Spannhub der Spannbacke (2) verschiebbar gegen einen zu ihm parallel im hinteren Backenteil (2.2) verschiebbar geführten Stellbolzen (23'') abgestützt ist, und daß der Stellbolzen (23'') über ein weiteres Getriebeglied (40) mit dem Kupplungsglied (8) gekuppelt ist.

11. Spannfutter nach Anspruch 10, dadurch gekennzeichnet, daß das Getriebeglied (40) ein parallel zur Verriegelungsstange (21') im hinteren Backenteil (2.2) verschiebbar geführter Steuerbolzen ist, der über Schrägflächen (41, 42) einerseits dem axial verschiebbaren Kupplungsglied (8) und andererseits dem Stellbolzen (23'') anliegt, wobei alle Schrägflächen (39, 41, 42) so gewählt sind, daß die axiale Verstellung des Kupplungsglieds (8) zu gegenläufiger Verstellung (23'') des Stellbolzens (23'') führt und die axiale Verstellung des Treibbolzens (23') den Verriegelungsstift (22') in die Gegenverzahnung (10) drückt.

**Revendications**

1. Mandrin de serrage avec des mors (2) qui peuvent être déplacés radialement à l'axe du mandrin dans le corps de mandrin (1) et qui sont chacun constitués de deux parties de mors (2.1, 2.2), disposées l'une derrière l'autre dans le sens de l'axe du mandrin et guidées individuellement dans le corps de mandrin, qui, afin de modifier la capacité de serrage, peuvent être coulissées l'une par rapport à l'autre et peuvent être mutuellement accouplées, par un élément d'accouplement (8), à des positions relatives différentes qui sont différenciées par un écartement chaque fois inférieur à la course de serrage maximale possible, avec également un élément d'entraînement (5) qui peut être déplacé axialement dans le corps de mandrin (1) conformément à la course de serrage maximale possible et qui est relié en transmission à la partie de mors axialement arrière (2.2) de chaque mors (2), et avec un dispositif de réglage (11) pour déplacer les éléments d'accouplement (8) entre deux positions finales respectives qui correspondent à l'état accouplé et à l'état désaccouplé des parties de mors (2.1, 2.2),

caractérisé en ce qu'un dispositif de blocage (12) est prévu pour fixer en position les parties de mors avant (2.1) dans le corps de mandrin (1),

et en ce que le dispositif de blocage (12), ainsi que l'élément d'entraînement (5) pour les mors (2) et le dispositif de réglage (11) pour les éléments d'accouplement (8), peuvent être commandés de manière dépendante de telle sorte que l'élément d'entraînement (5) accomplit un mouvement de va-et-vient avec une course qui correspond à la distance entre les positions de la partie de mors arrière (2.2) qui permettent l'accouplement des deux parties de mors (2.1, 2.2), que les éléments d'accouplement (8) sont accouplés dans une des deux directions de course et désaccouplés dans l'autre direction de course, et que les parties de mors avant (2.1) sont fixées en position dans le corps de mandrin (1) pendant la course de déplacement avec les éléments d'accouplement (8) désaccouplés.

2. Mandrin de serrage selon la revendication 1, caractérisé en ce que les éléments d'accouplement (8) sont des goujons d'accouplement guidés en déplacement axial dans les parties de mors arrière (2.2) et qui, à l'état accouplé, viennent s'engager par une denture frontale (9) sur une denture complémentaire (10) qui s'étend radialement sur les parties de mors avant (2.1).

3. Mandrin de serrage selon la revendication 2, caractérisé en ce que le dispositif de réglage (11) pour les éléments d'accouplement (8) comprend une bague de réglage (15) guidée en rotation coaxiale dans le corps de mandrin (1), qui est engagée de manière articulée avec une tige de réglage (17) qui est guidée tangentiellement dans le corps de mandrin (1) et qui peut être déplacée par un ensemble cylindre-piston (18) à double action, la bague de réglage (15) présentant pour chaque élément d'accouplement (8) un biais de commande (19) par l'intermédiaire duquel, lors de la rotation de la bague de réglage (15), les éléments d'accouplement (8) peuvent être déplacés à la position accouplée à l'encontre de la force d'un ressort de rappel (20).

4. Mandrin de serrage selon la revendication 2, caractérisé en ce que le dispositif de réglage (11) présente, pour chaque élément d'accouplement (8), une propre tige de réglage (27) guidée perpendiculairement à l'axe du mandrin dans le corps de mandrin (1) et qui peut être déplacée par un ensemble cylindre-piston (28) à double action, à laquelle l'élément d'accouplement (8) est accroché, dans une transmission à clavette (29), avec possibilité de déplacement radial d'un montant égal à la course de serrage des mors (2) par rapport à la tige de réglage (27), les ensembles cylindre-piston (28) de toutes les tiges de réglage (27) étant conjointement asservissables.

5. Mandrin de serrage selon l'une des revendications 1 à 4, caractérisé en ce qu'une butée (33), qui peut être déplacée dans la voie de l'élément d'entraînement (5) et qui limite la course de l'élément d'entraînement (5) au montant correspondant à la distance entre les positions de la partie de mors arrière (2.2) qui permettent l'accouplement des deux parties de mors (2.1, 2.2), est prévue sur le corps de mandrin (1).

6. Mandrin de serrage selon la revendication 5, caractérisé en ce que, lorsque l'élément d'entraînement (5) est réalisé sous la forme d'un piston d'entraînement qui est relié aux parties de mors arrière (2.2) par l'intermédiaire d'une transmission d'accrochage à clavette respective (7), la butée (33) est réalisée sous la forme d'un tenon faisant axialement saillie vers l'élément d'entraînement (5) et guidé en déplacement perpendiculairement à l'axe du mandrin dans le corps de mandrin (1) et qui, à sa position autorisant la course de serrage maximale possible, s'engage dans une des rainures (37) qui constituent la transmission d'accrochage à clavette (7) sur l'élément d'entraînement (5).

7. Mandrin de serrage selon la revendication 5 ou 6, caractérisé en ce qu'un ensemble cylindre-piston asservissable (35), qui travaille à l'encontre de la force d'un ressort de rappel (35), est prévu pour déplacer la butée (33).

8. Mandrin de serrage selon la revendication 3, caractérisé en ce que le dispositif de blocage (12) comprend pour chaque mors (2) une tige de verrouillage (21) guidée perpendiculairement à l'axe du mandrin dans le corps de mandrin (1) et qui s'engage par le côté, par un axe de verrouillage (22), dans la denture complémentaire (10) de la partie de mors avant (2.1) et peut être déplacée par une tige entraîneuse (23) qui est guidée axialement dans le corps de mandrin (1) et peut elle-même être déplacée par la bague de réglage (15).

9. Mandrin de serrage selon la revendication 8, caractérisé en ce que la tige de verrouillage (21) et la tige entraîneuse (23) sont reliées par une transmission d'accrochage à clavette (24), et en ce que la tige entraîneuse (23) est reliée à la bague de réglage (15) par l'intermédiaire d'une transmission à clavette constituée d'une dent de clavette (26), sur la bague de réglage (15), qui s'engage dans une rainure de clavette (25) sur la tige entraîneuse (23).

10. Mandrin de serrage selon la revendication 4, caractérisé en ce que le dispositif de blocage (12) comprend pour chaque mors (2) une tige de verrouillage (21') guidée perpendiculairement à l'axe du mandrin dans le corps de mandrin (1) et qui s'engage par le côté, par un axe de verrouillage (22') et à l'encontre de la force d'un ressort de rappel (38), dans la denture complémentaire (10) de la partie de mors avant (2.1), en ce que la tige de verrouillage (21') est appuyée par l'intermédiaire d'une face en biais (39), à l'encontre de la force du ressort de rappel (38), contre un goujon entraîneur (23') qui est guidé en déplacement axial dans le corps de mandrin (1) et qui est lui-même appuyé, avec possibilité de déplacement radial d'un montant égal à la course de serrage du mors (2), contre un goujon de réglage (23'') guidé en déplacement parallèlement au goujon entraîneur (23') dans la partie de mors arrière (2.2), et en ce que le goujon de réglage (23'') est relié à l'élément d'accouplement (8) par l'intermédiaire d'un élément de transmission supplémentaire (40).

11. Mandrin de serrage selon la revendication 10, caractérisé en ce que l'élément de transmission (40) est un goujon de commande guidé en déplacement parallèlement à la tige de verrouillage (21') dans la partie de mors arrière (2.2) et qui, par l'intermédiaire de faces en biais (41, 42), s'applique d'une part contre l'élément d'accouplement axialement déplaçable (8) et d'autre part contre le goujon de réglage (23''), toutes les faces en biais (39, 41, 42) étant choisies de telle sorte que le déplacement axial de l'élément d'accouplement (8) engendre un déplacement en sens contraire du goujon de réglage (23'') et que le déplacement axial du goujon entraîneur (23') pousse l'axe de verrouillage (22') dans la denture complémentaire (10).

## Claims

1. Clamping chuck with clamping jaws (2) which are radially adjustable relative to the chuck axis, each clamping jaw (2) consisting of two jaw parts (2.1, 2.2) which are located consecutively and guided individually in the chuck body, are movable relative to one another to change the clamping range and may be coupled together by a coupling member (8) in different positions from one another, these positions having a distance from one another of less than the maximum possible chucking stroke, the clamping chuck also having a drive member (5) which is axially adjustable in the chuck body (1) according to the maximum possible chucking stroke and which is engaged drivingly with the axially rear jaw part (2.2) of each clamping jaw (2), the chuck also comprising an adjusting device (11) for displacing the coupling members (8) between two end positions respectively which correspond to the engaged or disengaged state of the jaw parts (2.1, 2.2), characterised in that a fixing device (12) for fixing the front jaw parts (2.1) is provided in the chuck body (1), and in that the fixing device (12), together with the drive member (5) for the clamping jaws (2) and the adjusting device (11) for the coupling members (8) are controllable dependently on one another, in such a manner that the drive member (5) effects a reciprocating movement with a stroke, which corresponds to the distance between the positions of the rear jaw part (2.2) permitting coupling of the two jaw parts (2.1, 2.2), in that additionally the coupling members (8) are engaged in one of the two stroke directions and disengaged in the other stroke direction, and in that during the movement stroke with disengaged coupling members (8) the front jaw parts (2.1) are fixed in the chuck body (1).

2. Clamping chuck according to claim 1, characterised in that the coupling members (8) in the rear jaw parts (2.2) are axially adjustably guided coupling bolts, which in the engaged state mesh with a front toothing (9) on a counter-toothing (10) extending along the front jaw parts (2.1).

3. Clamping chuck according to claim 2, characterised in that the adjusting device (11) for the coupling members (8) comprises a set ring (15) coaxially rotatably guided in the chuck body (1), which ring (15) meshes pivotably with an adjusting rod (17) guided tangentially in the chuck body (1) and adjustable by a cylinder-piston mechanism (18) which may be actuated on both sides, the set ring (15) having a control slope (19) for each coupling member (8), via which, upon rotation of the set ring (15), the coupling members (8) are displaceable against the force of a restoring spring (20) into the engaged position.

4. Clamping chuck according to claim 2, characterised in that the adjusting device (11) for each coupling member (8) has a separate adjusting rod (27) guided in the chuck body (1) transversely to the chuck axis and adjustable by a cylinder-piston mechanism (28) which may be actuated on both sides, to which adjusting rod (27) the coupling member (8) is mounted in a key drive (29) so as to be displaceable relative to the adjusting rod (27) radially by the chucking stroke of the clamping jaws (2), in which case the cylinder-piston mechanisms (28) of all adjusting rods (27) are controllable together.

5. Clamping chuck according to one of claims 1 to 4, characterised in that a stop (33) is provided, which is movable into the path of the drive member (5) and which limits the stroke of the drive member (5) to the size corresponding to the distance between the positions of the rear jaw part (2.2) permitting coupling of the two jaw parts (2.1, 2.2).

6. Clamping chuck according to claim 5, characterised in that if the drive member (5) has the form of a drive piston, which engages via a respective key hook drive (7) with the rear jaw parts (2.2), the stop (33) is formed as a pin guided displaceably in the chuck body (1) transversely to the chuck axis and projecting axially relative to the drive member (5), and engages, in its position permitting the maximum possible chucking stroke, in one of the grooves (37) forming the key hook drive (7) on the drive member (5).

7. Clamping chuck according to claim 5 or 6, characterised in that in order to adjust the stop (33), a controllable cylinder-piston mechanism (36) is provided, which operates against the force of a restoring spring (35).

8. Clamping chuck according to claim 3, characterised in that the fixing device (12) for each clamping jaw (2) comprises a locking bar (21) guided in the chuck body (1) transversely to the chuck axis, a locking pin (22) of the locking bar (21) engaging laterally in the counter-toothing of the front jaw part (2.1) and being displaceable by a drive bar (23), which is guided axially in the chuck body (1) and is in turn adjustable by the set ring (15).

9. Clamping chuck according to claim 8, characterised in that the locking bar (21) and the drive bar (23) are connected by a key hook drive (24), and in that the drive bar (23) is engaged with the set ring (15) via a key drive, consisting of a key tooth (26) on the set ring (15), which engages in a keyway (25) on the drive bar (23).

10. Clamping chuck according to claim 4, characterised in that the fixing device (12) for each clamping jaw (2) comprises a locking bar (21') guided in the chuck body (1) transversely to the chuck axis, a locking pin (22') of the locking bar (21') engaging laterally in the counter-toothing (10) of the front jaw part (2.1), in that the locking bar (21') bears against a drive bolt (23') via an oblique face (39) against the force of the restoring spring (38), the drive bolt (23') being axially guided in the chuck body (1) so as to be displaceable radially through the chucking stroke of the clamping jaw (2), and bearing in turn against an adjusting bolt (23'') displaceably guided parallel to said drive bolt (23') in the rear jaw part (2.2), and in that the adjusting bolt (23'') is coupled to the coupling member (8) via a further drive member (40).

11. Clamping chuck according to claim 10, characterised in that the drive member (40) is a control bolt guided displaceably in the rear jaw part (2.2) and parallel to the locking bar (21'), and bears via oblique faces (41, 42) on the one side against the axially displaceable coupling member (8) and on the other side against the adjusting bolt (23''), all oblique faces being so chosen that the axial displacement of the coupling member (8) leads to contrary displacement (23'') of the adjusting bolt (23'') and the axial displacement of the drive bolt (23') pushes the locking pin (22') into the counter-toothing (10).

Fig. 1

Fig. 2

Fig. 3

Fig. 4

Fig. 5

Fig. 6

Fig. 7

Fig. 8